Europäisches Patentamt

(19) European Patent Office　　　(11) Publication number: **0 025 277**

Office européen des brevets　　　　　　　　　　　　**B1**

⑫　　　　　　　　　**EUROPEAN PATENT SPECIFICATION**

(45) Date of publication of patent specification: **11.03.87**　　(51) Int. Cl.⁴: **H 04 N 5/91**

(21) Application number: **80302750.7**

(22) Date of filing: **11.08.80**

(54) Record disc of video and audio information for stop-motion playback and methods and apparatus for making and playing such a record disc.

(30) Priority: **15.08.79 US 66620**

(43) Date of publication of application:
**18.03.81 Bulletin 81/11**

(45) Publication of the grant of the patent:
**11.03.87 Bulletin 87/11**

(84) Designated Contracting States:
**AT BE CH DE FR GB IT LI LU NL SE**

(56) References cited:
**DE-A-2 158 983**
**DE-A-2 849 791**
**FR-A-2 295 661**
**FR-A-2 464 003**
**GB-A-1 372 416**
**US-A-3 789 137**
**US-A-3 909 512**
**US-A-3 924 062**
**US-A-4 065 794**
**US-A-4 065 795**

(73) Proprietor: **DISCOVISION ASSOCIATES
P.O. Box 6600 3300 Hyland Avenue
Costa Mesa California 92626 (US)**

(72) Inventor: **Dakin, Wayne R.
7674 Sagewood Drive
Huntington Beach California 92648 (US)**

(74) Representative: **Arthur, George Fitzgerald et al
KILBURN & STRODE 30, John Street
London WC1N 2DD (GB)**

(56) References cited:

**IBM TECHNICAL DISCLOSURE BULLETIN,
vol.19, no.5, October 1976, New York, USA
LUDEMANN: "Extended audio-video system",
pages 1546-1547**

**IEEE TRANSACTIONS ON CONSUMER
ELECTRONICS, vol.CE-22, no.4, November
1976, New York US KENNEY: "Special purpose
applications of the optical videodisc system",
pages 327-337**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Background of the Invention

This invention relates generally to record media for recording video signals and, more particularly, to a record disc for use with playback apparatus to produce stop-motion video displays.

Record media of this particular type have typically been in the form of record discs and have recorded composite signals that contain both a video signal and an audio signal, simultaneously. The composite signal is normally recorded in a succession of substantially circular and concentrically arranged recording tracks on the disc, with each successive frame of the signal being recorded on a separate track. Stop-motion of a selected video frame is normally accomplished by repeatedly scanning a single track. Since the corresponding audio signal would be meaningless if it, too, were repeated successively, it is normally squelched during this stop-motion playback.

One technique for providing playback of an audio signal while displaying a stop-motion video frame is to record the same video signal on a number of successive recording tracks, but with a unique portion of the audio signal recorded on each track. In this manner, the composite signal can be played back from the record disc in a conventional manner, and the video display will appear to be in stop-motion, but will be accompanied by a normal audio signal. While this technique may prove satisfactory in some situations, it can sometimes be unduly wasteful of recording space on the record disc.

It will thus be appreciated that there is a need for a video recording disc, along with apparatus for formatting a composite signal for recording on the disc and apparatus for suitably processing the signal recovered from the disc, wherein the video signal can be played back in a stop-motion fashion, with an accompanying audio signal, while using a minimum number of recording tracks on the disc. The present invention fulfills this need.

The present invention is embodied in a record disc for recording a specially-formatted composite signal that includes both a video signal, representative of a video frame, and a corresponding audio signal, wherein the disc is suitable for use with special playback apparatus for displaying the video frame, in a repeated fashion, while accompanied by a playback of a corresponding analog audio signal. In accordance with the invention a composite signal is in consecutively arranged audio-information-containing, and video-information-containing, segments with an audio information-containing segment including a plurality of adjacent packets of compressed audio data containing the information for a number of repetitions of a video frame interleaved with conventional video synchronising signals, and a video information containing segment containing the information for a single video frame.

More particularly, a record disc may have a succession of substantially circular and concentrically arranged recording tracks. The special time-compressed audio signal is recorded on alternate tracks on the disc, and the corresponding frames of the video signal are recorded on the tracks therebetween. The audio signal is preferably in a digital format, and is arranged in a succession of bit packets that are interleaved with conventional periodic video synchronization signals, whereby the recorded audio signal has the appearance of a conventional video signal with a luminance value that alternates between white and black levels. Additionally, the bit rate of the successive bit packets in the recorded digital audio signal is synchronized with the frequency of periodic chrominance burst signals included in the video synchronization signals, thereby further simplifying detection during playback.

The recorded disc is suitable for playback in a stop-motion fashion, wherein each of the recorded video frames is displayed, in a repeated fashion, a prescribed number of times, while, simultaneously, the corresponding digital audio signal is converted back to an original analog format, for playback at its original speed. Thus, a stop-motion video sequence can be achieved, with accompanying audio, while utilizing a minimum number of recording tracks.

Apparatus in accordance with the present invention, for recording the composite signal on the video record disc, includes digitizing means for converting a conventional analog audio signal into a corresponding digital audio signal having a relatively low bit rate, for clocking into a digital memory device. The apparatus further includes means for clocking the digital data out of the memory to produce a succession of bit packets having a relatively high bit rate, along with means for combining the bit packets with periodic synchronization signals to produce the special digital audio signal for recording on the disc. As a result of the increase in bit rate, the original audio information is substantially compressed in time, permitted approximately 13 seconds of audio information to be recorded on a single track.

The digitizing means preferably comprises a delta modulator, whereby special digital synchronization signals for the digital data are not required. Also, the digital audio signal is low-pass filtered to limit its bandwidth to approximately that of a conventional video signal. This specially-formatted digital audio signal is then combined, in a serial fashion, with a corresponding video signal, and coupled to a conventional disc mastering machine for recording on the disc.

Apparatus for playing back a video record disc in accordance with the present invention includes means for separating the successive packets of the high bit rate digital audio signal interleaved with the periodic video synchronization signals, along with means for loading the separated packets of data into a digital memory device. The apparatus further includes means for clocking the digital data out of the memory device at a relatively slow bit rate, corresponding to its original non-compressed rate, and means for converting this relatively slow digital signal into a corresponding analog audio signal for playback at its original speed.

Simultaneous with the playback of each audio signal segment, the corresponding video signal, recorded on the adjacent track on the disc, is displayed, in a repeated fashion, a prescribed number of times. Each such video frame can include a special code in its vertical interval, indicating the number of times it is to be scanned by the playback apparatus. After this prescribed number of scans, the apparatus performs the same procedure for the next audio/video recording track pair.

In Pioneer Electronic Corporation's German Specification No. 2849791, there is disclosed a video disc record for stop motion playing in which two turns of a helical track include in succession video and audio signals for four fields, two of which make up one video frame so that the two spiral tracks make up two frames. Each field consists of a sequence of packets of information namely packets of video information corresponding to one line of a frame separated by packets of audio information representing in compressed form the audio information corresponding to a number of video frames. By playing both tracks repeatedly and in sequence, and using appropriate circuitry, it is possible to build up the single video frame and the audio signal to go with it, while it is repeated a number of times. However, the circuitry for separating the various packets of video and audio information from the four fields and building them up in appropriate order to produce the stop motion signal is very complicated, and an object of the present invention is to provide a system for storing the information enabling it to be recorded and reproduced using only relatively simple electric circuitry.

Other aspects and advantages of the present invention will become apparent from the following description of the preferred embodiment, taken in conjunction with the accompanying drawings, which disclose by way of example, the principles of the invention.

Brief Description of the Drawings

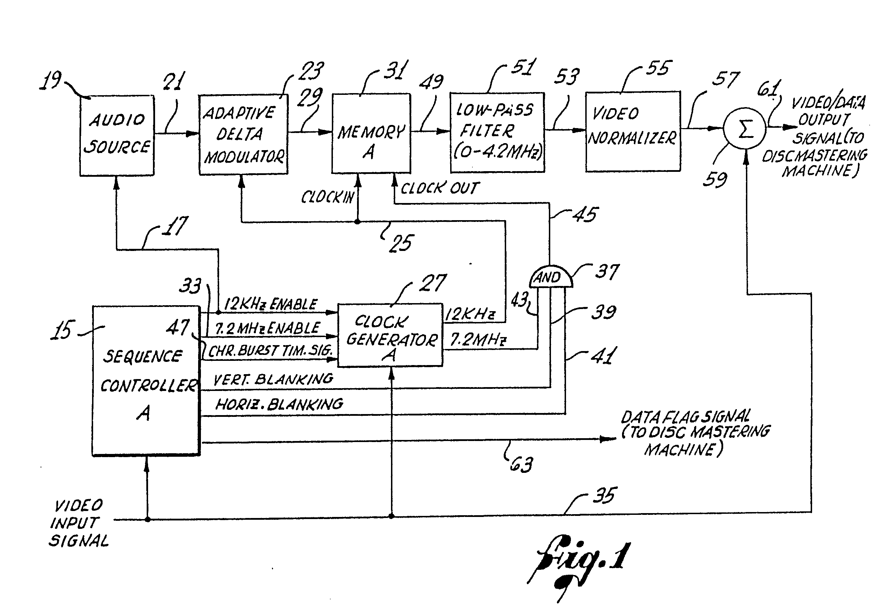

FIGURE 1 is a simplified block diagram of record formatting apparatus in accordance with the present invention, for producing a composite video signal that includes a special time-compressed audio signal, for recording on a video record disc, wherein the recorded disc is suitable for playback in a stop-motion fashion with accompanying audio;

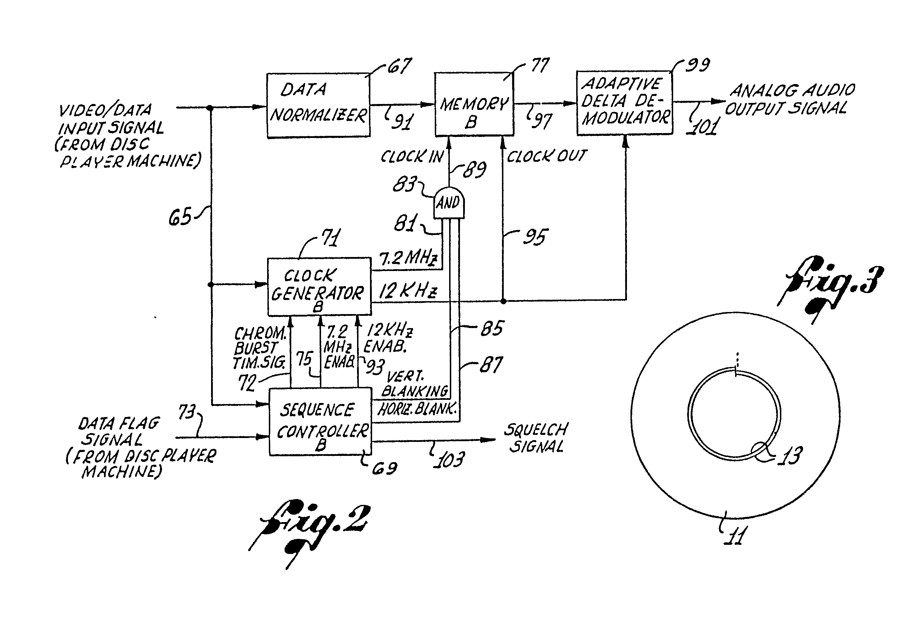

FIGURE 2 is a simplified block diagram of playback formatting apparatus for extracting the time-compressed audio signal from the composite video signal recovered from the video record disc to recreate the corresponding analog audio signal for playback while a corresponding video frame is being displayed in a stop-motion fashion; and

FIGURE 3 is a schematic diagram of a video record disc for recording the special composite signal produced by the apparatus of FIG. 1 wherein the time-compressed audio signal and a corresponding video signal are recorded on alternate tracks on the disc.

Referring now to the drawings, and particularly to FIG. 1, there is shown a record formatting apparatus for formatting a special composite signal that includes both audio and video information, for recording on a video record disc 11 (FIG. 3). The composite signal is recorded in a succession of substantially circular and concentrically arranged recording tracks 13, and the recorded disc is suitable for playback in a stop-motion fashion, wherein a video frame is displayed, repeatedly, a prescribed number of times, while accompanied by playback of a corresponding audio signal.

In accordance with the invention, the composite signal recorded on the disc 11 is a sequence of information segments alternating between audio information segments and corresponding video information segments, wherein each audio segment comprises a digitized and time-compressed audio signal and each video segment comprises one frame of a video signal. Additionally, each information segment is recorded on a separate track on the disc, so that during playback of the disc, a selected audio track can be scanned a single time and the audio segment recorded thereon can be entered into a memory device, after which the audio information can be extracted and converted back to an analog format, at its original speed, while the corresponding video track is scanned in a repeated fashion, to produce a stop-motion display of the video frame recorded thereon.

More particularly, the record formatting apparatus of FIG. 1 produces a special video/data output signal for coupling to a conventional disc mastering machine (not shown), for recording on the disc 11. The signal has the appearance of a conventional video signal, with its successive frames alternating between frames of the digitized and time-compressed audio signal and corresponding frames of the video signal. The audio frames include conventional periodic video synchronizing signals, interleaved with packets of the digital audio data.

Additionally, although the analog audio signal is initially converted to a digital audio signal having a bit rate of only 12 kilobits per second, the time-compressed digital audio signal recorded on the disc 11 has a bit rate of about 7.2 megabits per second, whereby its bandwidth is comparable to that of a conventional video signal. This increase in bit rate compresses the data in time by a substantial amount, whereby approximately 13 seconds of audio information can be recorded on a single recording track on the disc.

As shown in FIG. 1, operation of the record formatting apparatus is initiated by a sequence controller A 15, by producing a 12 KHz enable signal. This signal is coupled over line 17 to an audio source 19, such as an audio tape recorder, enabling it to produce an analog audio signal to be digitized and recorded on the disc 11. This analog audio signal is coupled over line 21 to an adaptive delta modulator 23, where it is converted to a corresponding low bit rate digital audio signal. The delta modulator is clocked by a 12 KHz clock signal supplied on line 25 from a clock generator A 27, which produces the clock signal whenever enabled by the aforementioned 12 KHz enable signal.

The digital audio signal produced by the delta modulator 23 has a bit rate of 12 kilobits per second and does not include any special synchronization bits. The digital signal is transmitted over line 29 to the data input terminal of a memory device A 31, where it is loaded by means of the 12 KHz clock signal, supplied on line 25 from the clock generator A 27. The memory device A can advantageously comprise about ten 16K × 1 dynamic RAM integrated circuits, arranged in a conventional manner, whereby approximately 13 seconds of the original analog audio signal produced by the audio source 19 can be stored.

It will be appreciated that, alternatively, digital audio data representative of an audio signal duration longer than about 13 seconds could be stored for subsequent recording on more than merely one recording track. This would permit the corresponding video frame to be displayed in a stop-motion fashion, with accompanying audio, for a period longer than about 13 seconds.

After the memory A 31 has been fully loaded with a segment of the digitized audio signal, the sequence controller A 15 automatically terminates the 12 KHz enable signal, to disable the audio source 19 and, likewise, disable the clock generator A 27 from producing the 12 KHz clock signal. Further clocking of audio data into the memory is therefore terminated. Thereafter, the sequence controller A produces a 7.2 MHz enable signal for transmission over line 33 to the clock generator A 27, which responds by producing a 7.2 MHz signal for coupling to the clock out terminal of the memory A, to clock out the stored digital data at a corresponding rate.

A video input signal that includes conventional vertical and horizontal synchronization pulses, along with conventional chrominance bursts, is supplied to the record formatting apparatus on line 35 from video circuitry (not shown). For alternate frames when the digitized and time-compressed audio signal is to be recorded on the record disc 11, the video input signal includes only the periodic synchronization signals, whereby the apparatus can operate to interleave packets of the digitized audio signal therewith.

Accordingly, the 7.2 MHz clock signal is coupled to the clock out terminal of the memory A 31 to clock out the digital audio data only during the periods between the successive synchronization signals. This is accomplished utilizing an AND gate 37 to "AND" together the 7.2 MHz signal and conventional vertical blanking and horizontal blanking signals, the latter two signals being produced by the sequence controller A 15, by continuously monitoring the video input signal.

The vertical blanking signal, which is in the logical "1" state at all times except during the vertical interval of the video signal, and the horizontal blanking signal, which is in the logical "1" state at all times except during the successive horizontal blanking intervals, are coupled over lines 39 and 41, respectively, to two input terminals of the AND gate 37. The 7.2 MHz signal is coupled over line 43 from the clock generator A 27 to a third input terminal of the AND gate. As a result, clock pulse bursts are produced by the AND gate and coupled over line 45 to the clock out terminal of the memory A 31, whereby corresponding packets of the digital audio data are produced during the appropriate time intervals.

In accordance with another feature of the invention, the frequency of the nominally 7.2 MHz clock signal coupled to the memory A 31 is synchronized with the frequency of the successive chrominance bursts in the video input signal, supplied on line 35. In particular, the frequency of the nominally 7.2 MHz clock signal is exactly 2× that of the chrominance bursts, which normally have a frequency of 3.579545 MHz. This facilitates a proper detection of the time-compressed digital audio signal by apparatus for playing back the recorded disc 11.

To accomplish this frequency synchronization, the sequence controller A 15 continuously monitors the video input signal supplied on line 35 and produces a chrominance burst timing signal that coincides with the timing of the successive bursts. This timing signal is coupled over line 47 to the clock generator A 27, to gate an internal oscillator and enable it to become synchronized, automatically and in a conventional manner, with the frequency of the successive bursts.

The successive packets of digital audio data output by the memory A 31, at a bit rate of about 7.2 megabits per second, form a time-compressed digital audio signal that is coupled over line 49 from the data output terminal of the memory A to a low-pass filter 51, where the bandwidth of the signal is limited to approximately 4.2 MHz. This bandwidth is comparable to that of a conventional video signal. The filter is preferably a linear-phase filter, to minimize overshoot and intersymbol interference.

The filtered digital signal is coupled over line 53 from the low-pass filter 51 to a video normalizer 55, which adjusts the minimum and maximum values of the filtered signal to levels corresponding to 0 and 100 IRE, respectively. As a result, the full dynamic range of subsequent video circuitry can be fully utilized. Thereafter, the normalized signal is coupled over line 57 to a summer 59, where it is summed with the aforementioned video input signal, supplied on line 35. The resulting video/data output signal has the appearance of a conventional video signal, but with filtered digital data, rather than conventional luminance and chrominance information, in alternate frames. This signal is coupled over line 61 to a conventional disc mastering machine (not shown) for recording on the record disc 11.

After all of the digital audio data has been clocked out of the memory A 31, i.e., sufficient data to complete one video frame, the 7.2 MHz enable signal is terminated by the sequence controller A 15, and the next frame of the video/data output signal comprises conventional video information corresponding to the video input signal, supplied on line 35. After one frame of video signal has been output, the above-described audio signal formatting procedure is repeated, beginning with the enabling of the audio source 19 by the 12 KHz enable signal supplied on line 17 from the sequence controller A.

The successive alternating frames of audio and video information are distinguishable from each other by a suitable flag code recorded in a conventional manner in the respective vertical intervals of the frames. This code can advantageously further indicate the prescribed number of times each video frame is to be repeatedly displayed during subsequent playback of the disc 11, while the corresponding time-compressed audio signal is being converted back to an analog format and played at its original speed. To facilitate the recording of this code in the respective vertical intervals, the sequence controller A 15 produces a data flag signal, indicating which of the alternate video frames includes the time-compressed audio signal. This data flag signal is coupled over line 63 to the disc mastering machine.

With reference now to FIG. 2, there is shown playback formatting apparatus for use in processing a video/data input signal recovered from the record disc 11 by a conventional disc player machine (not shown), to re-create the original analog audio signal, for playback while the associated video frame is being repeatedly displayed the prescribed number of times. In particular, the apparatus operates to extract the successive packets of digital audio data from the video/data input signal and to convert the data back to the original analog audio signal.

As shown in FIG. 2, the video/data input signal is supplied on line 65 from the disc player machine to a data normalizer 67, a sequence controller B 69, and a clock generator B 71. The data normalizer functions to adjust the levels of the input signal such that on alternate frames, when the signal corresponds to the time-compressed audio signal, the input signal is adjusted to levels suitable for subsequent digital processing. The sequence controller B monitors the video/data input signal and, accordingly, produces a chrominance burst timing signal, indicating the occurrence of chrominance bursts in the input signal, and vertical blanking and horizontal blanking signals, indicating the occurrence of vertical and horizontal blanking intervals, respectively, in the input signal. The chrominance burst timing signal is coupled over line 72 to the clock generator B, to gate an internal oscillator and enable it to synchronize with the frequency of the chrominance bursts, which are simultaneously present in the video/data input signal. This is essentially the same technique as previously described in connection with the record formatting apparatus of FIG. 1.

In addition to the video/data input signal, a data flag signal is coupled over line 73 from the disc player machine to the sequence controller B 69 of the playback formatting apparatus. This flag signal indicates that the frame of the video/data input signal currently being supplied on line 65 contains the time-compressed audio signal. Whenever a data flag signal is received, the sequence controller B outputs a 7.2 MHz enable signal for coupling over line 75 to the clock generator B 71, which correspondingly produces a 7.2 MHz clock signal that is synchronized with the periodic chrominance bursts in the video/data input signal. This 7.2 MHz clock signal is utilized in producing clock pulse bursts, synchronized with the video/data input signal, for clocking the successive packets of digital audio data, included in the input signal, into a memory B 77.

To produce the 7.2 MHz clock pulse bursts, for clocking the digital audio data into the memory B 77, the 7.2 MHz clock signal is coupled over line 81 from the clock generator B 71 to one input terminal of an AND gate 83. Simultaneously, the sequence controller B 69 produces the vertical blanking and horizontal blanking signals for coupling over lines 85 and 87, respectively, to two additional input terminals of the AND gate. The AND gate therefore produces a succession of clock pulse bursts, at a bit rate of 7.2 MHz, coinciding with the timing of the bit packets of the time-compressed digital audio signal portion of the video/data input signal.

This clock pulse burst signal is coupled over line 89 from the AND gate 83 to the clock in terminal of the memory B 77, to load into the memory the successive bits of the normalized video/data input signal, which is coupled over line 91 from the data normalizer 67 to the data input terminal of the memory B. Similar to the memory A 31 of the record formatting apparatus (FIG. 1), the memory B 77 of the playback formatting apparatus (FIG. 2) can advantageously comprise about ten $16K \times 1$ dynamic RAM integrated circuits, connected in a conventional manner.

After the digital data from one entire frame of the video/data input signal, representative of about 13 seconds of the original analog audio signal, has been clocked into the memory B 77 for storage, the sequence controller B 69 terminates the 7.2 MHz enable signal, to likewise terminate the clock pulse burst signal coupled to the clock in terminal of the memory B. Thereafter, for the following frame of the video/data input signal, i.e., while the video frame corresponding to the stored digital audio data is present, the digital data being stored in the memory B is clocked out at a 12 kilobit per second rate and converted to its original analog format for playback simultaneous with a repeated display of the video frame.

To accomplish this conversion, the sequence controller B 69 outputs a 12 KHz enable signal for coupling over line 93 to the clock generator B 71, which, accordingly, outputs a 12 KHz clock signal for coupling over line 95 to a clock out terminal of the memory B 77. As a result, a 12 kilobit per second intermediate digital data signal is output by the memory B and coupled over line 97 from the output terminal of the memory B to an adaptive delta demodulator 99, for conversion back to its original analog format. The demodulator is also clocked by the 12 KHz clock signal.

The analog audio output signal produced by the adaptive delta demodulator 99 is then coupled over line 101 to a suitable audio speaker (not shown) for playback while the player machine is playing back the corresponding video frame for display on a video monitor (not shown), the prescribed number of times. In a conventional manner, the playback apparatus can be made responsive to the special flag code recorded in the vertical interval of the frame, to scan the track the prescribed number of times.

The sequence controller B 69 of the playback formatting apparatus further operates to produce a squelch signal for output on line 103 whenever an analog audio signal is not being output by the apparatus. This squelch signal can be utilized to insure that the audio signal is coupled to the speaker only when it is being output by the delta demodulator 99.

In another embodiment of the present invention (not shown in the drawings), the time-compressed audio signal recorded on the disc is in an analog format. The signal is formatted by initially periodically sampling the original analog audio signal and storing the successive samples in an analog memory device, such as a charge coupled device (CCD). The successive samples are then extracted from the memory device at a relatively high rate and interleaved with conventional video synchronization signals, to produce the time-compressed audio signal.

From the foregoing description, it should be apparent that the present invention provides a record disc, along with record formatting apparatus for producing a special composite audio and video signal for recording on the record disc, and playback formatting apparatus for separating the audio information from the signal recovered and for recreating the original analog audio signal, wherein the record disc can be played back in a stop-motion fashion, with accompanying audio. Each segment of the analog audio signal is converted to a digital format and compressed in time interleaved with video synchronisation signals for recording on a track of the record while the corresponding video signal corresponding to a single frame is recorded on an adjacent track.

## Claims

1. A record disc for storing a composite signal that includes alternating segments of audio information and segments of video information, and conventional video synchronizing signals, including a plurality of consecutively arranged information tracks containing said composite signal, said segments of audio information containing compressed audio data representing continuous real-time audio, each of said segments of video information containing real-time video data, and characterized in that: said plurality of consecutively arranged information tracks include audio information-containing tracks and separate video information-containing tracks, said audio information-containing tracks including a plurality of adjacent packets of compressed audio data interleaved with conventional video synchronizing signals defining said segment of audio information, each of said video information-containing tracks including a plurality of adjacent packets of real-time video data interleaved with conventional video synchronizing signals, said plurality of adjacent packets of real-time video defining one of said video information segments, each said video information segment containing a single video frame.

2. The record disc as defined in Claim 1, characterized in that at least one of said audio information-containing segments is stored in a plurality of adjacent audio information tracks.

3. The record disc as defined in Claim 2, characterized in that the composite signal stored on said disc includes a coded signal which is indicative of the equivalent real-time length of said time-compressed audio information segment.

4. The record disc as defined in Claim 1, characterized in that the composite signal stored on said disc includes a flag signal which indicates that the subsequent information segment stored on the disc contains time-compressed audio.

5. The record disc as defined in Claim 1, characterized in that: said record disc has a succession of substantially circular and concentrically arranged recording tracks; said information segments successively alternate between audio information segments and corresponding video information segments; and each of said successive information segments is stored on a separate one of said successive information tracks, whereby each audio information segment and its corresponding video information segment are stored on adjacent tracks.

6. The record disc as defined in Claim 1, characterized in that: each of said compressed audio data is in digital format; said conventional video synchronizing signals include periodic chrominance burst signals having a prescribed frequency; and the bit rate of the digital data in said audio information segments is synchronized with the prescribed frequency of said chrominance burst signals.

7. Apparatus for recording an analog audio signal and a corresponding video signal on a record disc as claimed in any one of Claims 1 to 6, the apparatus comprising means for converting an analog audio signal into a corresponding digital audio signal, means for time compressing the digitized audio signal, and means for recording the time compressed audio and real-time video on the record disc, characterized in that: said means for compressing the digital audio signal in time includes means for interleaving the compressed digital audio signal with conventional video synchronizing signals, to produce a plurality of adjacent time-compressed digital audio signal data packets interleaved with said synchronizing signals; and said means for recording includes means for recording the time-compressed digital audio signal on at least one of said recording tracks on the record disc, and for recording a single frame of a corresponding video signal on an adjacent recording track on the record disc.

8. Apparatus as defined in Claim 7, characterized in that the means for recording also functions to record a special code signal on the audio recording track, said special code signal indicative of the equivalent real-time length of said time compressed audio signal.

9. Apparatus as defined in Claim 7, and further characterized by means for filtering the time-compressed digital audio signal to limit the signal to a bandwidth comparable to that of the corresponding video signal.

10. Apparatus as defined in Claim 7, characterized in that: the video synchronizing signals include periodic chrominance burst signals having a prescribed frequency; and the time-compressed digital audio signal produced by the means for compressing has a bit rate synchronized with the prescribed frequency of the chrominance burst signals.

11. Apparatus for recording an analog audio signal and a corresponding frame of a video signal on a record disc as claimed in any one of Claims 1 to 6, said apparatus comprising means for converting the analog audio signal to a relatively low bit rate digital audio signal, compressing the digitized audio signal, and recording the compressed audio signal and real-time video signal on the record disc, characterized by: memory means for storing the data included in the low bit rate digital audio signal; means for extracting the data stored in the memory means, to produce a succession of adjacent bit packets having a relatively high bit rate; means for interleaving the successive bit packets with conventional video synchronizing signals that include periodic chrominance burst signals having a prescribed frequency synchronized with the bit rate of the bit packets, to produce a time-compressed digital audio signal; and means for recording the time-compressed digital audio signal on an audio recording track on the record disc, and for recording the video signal on a separate video recording track on the record disc.

12. A method for recording an analog audio signal and a corresponding video signal on a record disc as claimed in any one of Claims 1 to 6, the method comprising steps of converting an analog audio signal into a corresponding digital audio signal, compressing the digital audio signal in time and recording the compressed audio signal and real-time video signal on the record disc, characterized in that: said compressing step includes compressing the digital audio signal in time and interleaving the compressed digital audio signal with conventional video synchronizing signals, to produce a plurality of adjacent time-compressed digital audio signal data packets interleaved with said synchronizing signals; said recording step includes: recording the time-compressed, digital audio signal on an audio recording track on the record disc; recording a corresponding video signal on a separate video recording track on the record disc; and repeating the preceding steps for additional sets of corresponding audio and video signals, the signals being recorded on different pairs of corresponding audio and video recording tracks.

13. Apparatus for playing a record disc as claimed in Claim 1 including a reader of the information, a memory (77) arranged to store each time-compressed audio information segment, means arranged to reproduce the associated segment of video information repeatedly a number of times, which number is identified on the record by a special code and means (69, 71, 83) for reading out of memory the stored time-compressed audio information segment and simultaneously reproducing the audio information in the segments in time, at a normal (time-expanded) rate, synchronized from the information on the record, characterized in that: said reader comprises means for reading all of the time-compressed audio information in said audio information segment in one pass of the track or tracks containing said audio information segment; and means for subsequently repeatedly reproducing said associated segment of video information.

14. Apparatus for playing a record disc as claimed in any one of Claims 1 to 6, having recorded thereon a special composite signal that includes a digitized and time-compressed audio signal and a video signal representative of a video frame, wherein the apparatus operates to produce a stop-motion display of the video frame represented by the recorded video signal, while accompanied by an analog audio signal corresponding to the recorded time-compressed audio signal, said apparatus comprising; means for scanning the record disc to recover the time-compressed audio signal from the record, said time-compressed audio signal having a relatively high bit rate; memory means (77) for storing the successive packets of digital data derived from the recovered time-compressed audio signal, said means for scanning being further operable, after the time-compressed audio signal has been recovered, to recover the video signal from the record disc; means for displaying in a repeated fashion, the video frame represented by the recovered video signal; means (69, 71, 83), operable simultaneously with said means for displaying, for extracting the digital data from said memory means (77) to produce an intermediate digital signal corresponding to the time-compressed audio signal, said intermediate signal having a relatively low bit rate; and characterized in that: said time-compressed audio signal is recorded on a first track of the disc and said video frame is recorded on a second track; the digital data included in the time-compressed audio signal recorded on the first track on the record disc is interleaved with conventional periodic video synchronization signals that include periodic chrominance burst signals having a prescribed frequency, and wherein the bit rate of the time-compressed audio signal is synchronised with the prescribed frequency of the chrominance burst signals; and said apparatus includes means (69, 83) for separating the digital data from the synchronization signals of the time-compressed audio signal recovered from the disc, to produce a succession of packets of digital data.

15. The apparatus as claimed in Claim 14, characterized by: delta demodulation means (99) for converting the intermediate digital signal to the corresponding analog audio signal, for playback simultaneous with the repeated display of the video frame.

**Patentansprüche**

1. Aufzeichnungsplatte zum Speichern eines zusammengesetzten Signals, das einander abwechselnde Segmente von Audioinformation und Segmente von Videoinformation enthält, sowie herkömmliche Videosynchronsignale, mit einer Vielzahl von aufeinanderfolgend angeordneten Informationsspuren, die das zusammengesetzte Signal enthalten, wobei die Audioinformationssegmente komprimierte Audiodaten enthalten, die ein kontinuierliches Echtzeit-Audio darstellen, und jedes der Videoinformationssegment Echtzeit-Videodaten enthält, dadurch gekennzeichnet, daß: die Vielzahl von aufeinanderfolgend angeordneten Informationsspuren Audioinformation enthaltende Spuren und gesonderte Videoinformation enthaltende Spuren umfaßt, wobei die Audioinformation enthaltenden Spuren eine Vielzahl von benachbarten Paketen von komprimierten Audiodaten in Zwischeneinanderanordnung mit herkömmlichen Videosynchronsignalen umfassen, die das Segment der Audioinformation definieren, und wobei jede der Videoinformation enthaltenden Spuren eine Vielzahl von benachbarten Paketen von Echtzeit-Videodaten in Zwischeneinanderanordnung mit herkömmlichen Videosynchronsignalen umfaßt, wobei die Vielzahl von benachbarten Echtzeit-Video-Paketen eines der Videoinformationssegmente definiert, wobei jedes Videoinformationssegment ein einzelnes Video-Teilbild enthält.

2. Aufzeichnungsplatte nach Anspruch 1, dadurch gekennzeichnet, daß wenigstens eines der Audioinformation enthaltenden Segmente in einer Vielzahl von benachbarten Audioinformationsspuren gespeichert ist.

3. Aufzeichnungsplatte nach Anspruch 2, dadurch gekennzeichnet, daß das auf der Platte gespeicherte zusammengesetzte Signal ein codiertes Signal enthält, das auf die äquivalente Echtzeit-Länge des zeitlich komprimierten Audioinformationssignals hinweist.

4. Aufzeichnungsplatte nach Anspruch 1, dadurch gekennzeichnet, daß das auf der Platte gespeicherte zusammengesetzte Signal ein Kennzeichensignal enthält, das angibt, daß das nachfolgende auf der Platte gespeicherte Informationssegment zeitlich komprimiertes Audio enthält.

5. Aufzeichnungsplatte nach Anspruch 1, dadurch gekennzeichnet, daß: die Aufzeichnungsplatte eine Folge von im wesentlichen kreisförmigen und konzentrisch angeordneten Aufzeichnungsspuren hat; die Informationssegmente aufeinanderfolgend zwischen Audioinformationssegmenten und entsprechenden Videoinformationssegmenten wechseln; und jedes der aufeinanderfolgenden Informationssegmente in einer gesonderten der aufeinanderfolgenden Informationsspuren gespeichert ist, wodurch jedes Audioinformationssegment und sein entsprechendes Videoinformationssegment in benachbarten Spuren gespeichert sind.

6. Aufzeichnungsplatte nach Anspruch 1, dadurch gekennzeichnet, daß: alle komprimierten Audiodaten in digitalem Format vorliegen; die herkömmlichen Videosynchronsignale periodische Chrominanzimpulssignale mit einer vorgeschriebenen Frequenz umfassen; und die Bitgeschwindigkeit der digitalen Daten in den Audioinformationssegmenten mit der vorgeschriebenen Frequenz der Chrominanzimpulssignale synchronisiert ist.

7. Gerät zum Aufzeichnen eines analogen Audiosignals und eines entsprechenden Videosignals auf einer Aufzeichnungsplatte nach einem der Ansprüche 1 bis 6, wobei das Gerät Mittel zum Umwandeln eines analogen Audiosignals in ein entsprechendes digitales Audiosignal, Mittel zum zeitlichen Komprimieren des digitalisierten Audiosignals und Mittel zum Aufzeichnen des zeitlich komprimierten Audiosignals und von Echtzeit-Video auf der Aufzeichnungsplatte umfaßt, dadurch gekennzeichnet, daß: die Mittel zum Komprimieren des digitalen Audiosignals in der Zeit Mittel zur Zwischeneinanderanordnung des komprimierten digitalen Audiosignals mit herkömmlichen Videosynchronsignalen umfassen, um eine Vielzahl von benachbarten, zeitlich komprimierten digitalen Audiosignal-Datenpaketen in Zwischeneinanderanordnung mit den Synchronsignalen zu erzeugen; und die Mittel zum Aufzeichnen Mittel zum Aufzeichnen des zeitlich komprimierten digitalen Audiosignals in wenigstens einer der Aufzeichnungsspuren auf der Aufzeichnungsplatte und zum Aufzeichnen eines einzigen Teilbildes eines entsprechenden Videosignals in einer benachbarten Aufzeichnungsspur auf der Aufzeichnungsplatte umfassen.

8. Gerät nach Anspruch 7, dadurch gekennzeichnet, daß die Mittel zum Aufzeichnen auch wirken, um ein spezielles Codesignal in der Audioaufzeichnungsspur aufzuzeichnen, welches spezielle Codesignal auf die äquivalente Echtzeit-Länge des zeitlich komprimierten Audiosignals hinweist.

9. Gerät nach Anspruch 7, weiter gekennzeichnet durch Mittel zum Filtern des zeitlich komprimierten digitalen Audiosignals, um das Signal auf eine Bandbreite zu beschränken, die vergleichbar jener des entsprechenden Videosignals ist.

10. Gerät nach Anspruch 7, dadurch gekennzeichnet, daß: die Videosynchronsignale periodische Chrominanzimpulssignale mit einer vorgeschriebenen Frequenz umfassen; und das durch die Mittel zum Komprimieren erzeugte zeitlich komprimierte digitale Audiosignal eine Bitgeschwindigkeit hat, die mit der vorgeschriebenen Frequenz der Chrominanzimpulssignale synchronisiert ist.

11. Gerät zum Aufzeichnen eines analogen Audiosignals und eines entsprechenden Teilbildes eines Videosignals auf einer Aufzeichnungsplatte nach einem der Ansprüche 1 bis 6, wobei das Gerät Mittel zum Umwandeln des analogen Audiosignals in ein digitales Audiosignal mit verhältnismäßig niedriger Bitgeschwindigkeit, Komprimieren des digitalisierten Audiosignals und Aufzeichnen des komprimierten Audiosignals und des Echtzeit-Videosignals auf der Aufzeichnungsplatte aufweist, gekennzeichnet durch: Speichermittel zum Speichern der im digitalen Audiosignal mit niedriger Bitgeschwindigkeit enthaltenen Daten; Mittel zum Entnehmen der in den Speichermitteln gespeicherten Daten, um eine Folge von benachbarten Bitpaketen mit verhältnismäßig hoher Bitgeschwindigkeit zu erzeugen; Mittel zur Zwischeneinanderanordnung der aufeinanderfolgenden Bitpakete mit herkömmlichen Videosynchronsignalen, die periodische Chrominanzimpulssignale mit einer vorgeschriebenen, mit der Bitgeschwindigkeit der Bitpakete synchronisierten Frequenz einschließen, um ein zeitlich komprimiertes digitales Audiosignal zu erzeugen; und Mittel zum Aufzeichnen des zeitlich komprimierten digitalen Audiosignals in einer Audioaufzeichnungsspur auf der Aufzeichnungsplatte und zum Aufzeichnen des Videosignals in einer gesonderten Videoaufzeichnungsspur auf der Aufzeichnungsplatte.

12. Verfahren zum Aufzeichnen eines analogen Audiosignals und eines entsprechenden Videosignals auf einer Aufzeichnungsplatte gemäß einem der Ansprüche 1 bis 6, wobei das Verfahren die Schritte umfaßt, daß ein analoges Audiosignal in ein entsprechendes digitales Audiosignal umgewandelt wird, das digitale Audiosignal in der Zeit komprimiert und das komprimierte Audiosignal und ein Echtzeit-Videosignal auf der Aufzeichnungsplatte aufgezeichnet wird, dadurch gekennzeichnet, daß: der Komprimierschritt das Komprimieren des digitalen Audiosignals in der Zeit und das Zwischeneinanderanordnen des komprimierten digitalen Audiosignals mit herkömmlichen Videosynchronsignalen umfaßt, um eine Vielzahl von benachbarten zeitlich komprimierten Digitalaudiosignal-Datenpaketen in Zwischeneinanderanordnung mit den Synchronsignalen zu erzeugen; der Aufzeichnungsschritt einschließt: das Aufzeichnen des zeitlich komprimierten digitalen Audiosignals in einer Audioaufzeichnungsspur auf der Aufzeichnungsplatte; das Aufzeichnen eines entsprechenden Videosignals in einer gesonderten Videoaufzeichnungsspur auf der Aufzeichnungsplatte; und das Wiederholen der vorhergehenden Schritte für zusätzliche Gruppen von entsprechenden Audio- und Videosignalen, wobei die Signale in verschiedenen Paaren von entsprechenden Audio- und Videoaufzeichnungsspuren aufgezeichnet werden.

13. Gerät zum Abspielen einer Aufzeichnungsplatte gemäß Anspruch 1, mit einem Leser für die Information, einem Speicher (77), der eingerichtet ist, um jedes zeitlich komprimierte Audioinformationssegment zu speichern, Mitteln, die eingerichtet sind, um das zugehörige Segment der Videoinformation wiederholt eine Anzahl Male zu reproduzieren, wobei die Anzahl auf der Aufzeichnung durch einen speziellen Code angegeben ist, und Mitteln (69, 71, 83) zum Auslesen des gespeicherten zeitlich komprimierten Audioinformationssegmentes aus dem Speicher und gleichzeitigen Reproduzieren der Audioinformation in den Segmenten in der Zeit, mit einer normalen (zeitlich expandierten) Geschwindigkeit, unter Synchronisierung mit der Information auf der Aufzeichnung, dadurch gekennzeichnet, daß: der Leser Mittel zum Lesen der gesamten zeitlich komprimierten Audioinformation im Audioinformationssegment in einem Durchlauf der Spur oder Spuren, die das Audioinformationssegment enthält bzw. enthalten; und Mittel zum aufeinanderfolgenden, wiederholten Reproduzieren des zugehörigen Segments der Videoinformation umfaßt.

14. Gerät zum Abspielen einer Aufzeichnungsplatte nach einem der Ansprüche 1 bis 6, auf der ein spezielles zusammengesetztes Signal aufgezeichnet ist, das ein digitalisiertes und zeitlich komprimiertes Audiosignal und ein ein Videoteilbild darstellendes Videosignal enthält, wobei das Gerät arbeitet, um eine Standbildwiedergabe des durch das aufgezeichnete Videosignal dargestellten Videoteilbildes zu erzeugen, wobei es von einem analogen Audiosignal entsprechend dem aufgezeichneten zeitlich komprimierten Audiosignal begleitet ist, welches Gerät umfaßt: Mittel zum Abtasten der Aufzeichnungsplatte, um das zeitlich komprimierte Audiosignal von der Aufzeichnung wiederzugewinnen, wobei das zeitlich komprimierte Audiosignal eine verhältnismäßig hohe Bitgeschwindigkeit aufweist; Speichermittel (77) zum Speichern der aufeinanderfolgenden Pakete von digitalen Daten, die vom wiedergewonnenen zeitlich komprimierten Audiosignal abgeleitet sind, wobei die Mittel zum Abtasten weiter wirksam sind, um nach der Wiedergewinnung des zeitlich komprimierten Audiosignals das Videosignal von der Aufzeichnungsplatte wiederzugewinnen; Mittel zur wiederholten Wiedergabe des durch das wiedergewonnene Videosignal dargestellten Videoteilbildes; Mittel (69, 71, 83), die gleichzeitig mit den Mitteln zur Wiedergabe wirksam sind, zum Entnehmen der digitalen Daten aus den Speichermitteln (77), um ein digitales Zwischensignal entsprechend dem zeitlich komprimierten Audiosignal zu erzeugen, wobei das Zwischensignal eine verhältnismäßig niedrige Bitgeschwindigkeit hat; und dadurch gekennzeichnet, daß: das zeitlich komprimierte Audiosignal in einer ersten Spur auf der Platte aufgezeichnet ist und das Videoteilbild in einer zweiten Spur aufgezeichnet ist; die im zeitlich komprimierten Audiosignal, das in der ersten Spur auf der Aufzeichnungsplatte aufgezeichnet ist, enthaltenen digitalen Daten in Zwischeneinanderanordnung mit herkömmlichen periodischen Videosynchronsignalen vorgesehen sind, die periodische Chrominanzimpulssignale mit einer vorgeschriebenen Frequenz einschließen, und wobei die Bitgeschwindigkeit des zeitlich komprimierten Audiosignals mit der vorgeschriebenen Frequenz der Chrominanzimpulssignale synchronisiert ist; und das Gerät Mittel (69, 83) zum Trennen der digitalen Daten von den Synchronsignalen des von der Platte wiedergewonnenen zeitlich komprimierten Audiosignals enthält, um eine Folge von Paketen von digitalen Daten zu erzeugen.

15. Gerät nach Anspruch 14, gekennzeichnet durch: Deltademodulationsmittel (99) zum Umwandeln des digitalen Zwischensignals in das entsprechende analoge Audiosignal zur Wiedergabe gleichzeitig mit der wiederholten Wiedergabe des Videoteilbildes.

**Revendications**

1. Enregistrement sur disque pour stocker un signal composite qui contient des segments qui alternent d'information audio et des segments d'information vidéo, et des signaux conventionnels de synchronisation vidéo, comprenant un certain nombre de pistes consécutivement agencées de l'information contenant ledit signal composite, lesdits segments de l'information audio contenant les données audio comprimées représentant le signal audio continu en temps réel, chacun desdits segments de l'information vidéo contenant des données vidéo en temps réel, et caractérisé en ce que: lesdites pistes consécutivement agencées de l'information comprennent des pistes contenant l'information audio et des pistes séparées contenant l'information vidéo, lesdites pistes contenant l'information audio comprenant un certain nombre de paquets adjacents de données audio comprimées entrelacées avec des signaux conventionnels de synchronisation vidéo définissant ledit segment de l'information audio, chacune desdites pistes contenant l'information vidéo comprenant un certain nombre de paquets adjacents de données vidéo en temps réel entrelacées avec des signaux conventionnels de synchronisation vidéo, lesdits paquets adjacents de vidéo en temps réel définissant l'un des segments d'information vidéo, chaque segment d'information vidéo contenant une seule trame double vidéo.

2. Enregistrement sur disque tel que défini à la revendication 1, caractérisé en ce qu'au moins l'un desdits segments contenant l'information audio est stocké dans un certain nombre de pistes adjacentes de l'information audio.

3. Enregistrement sur disque tel que défini à la revendication 2, caractérisé en ce que le signal composite stocké sur ledit disque contient un signal codé qui est indicatif de la longueur équivalente en temps réel dudit segment d'information audio comprimé dans le temps.

4. Enregistrement sur disque tel que défini à la revendication 1, caractérisé en ce que le signal composite stocké sur ledit disque contient un signal drapeau qui indique que le segment d'information subséquent stocké sur ledit disque contient le signal audio comprimé dans le temps.

5. Enregistrement sur disque tel que défini à la revendication 1, caractérisé en ce que: ledit enregistrement sur disque a une succession de pistes d'enregistrement sensiblement circulaires et concentriques; lesdits segments de l'information alternant successivement entre des segments d'information audio et des segments correspondant de l'information vidéo; et chacun desdits segments successifs d'information est stocké sur l'une des pistes d'information successives séparées, ainsi chaque segment d'information audio et son segment d'information vidéo correspondant sont stockés sur des pistes adjacentes.

6. Enregistrement sur disque tel que défini à la revendication 1, caractérisé en ce que: chacune desdites données audio comprimées est sous format numérique; lesdits signaux conventionnels de synchronisation vidéo contiennent des signaux périodiques de salve de chrominance ayant une fréquence prescrite; et le débit binaire des données numériques dans lesdits segments d'information audio est synchronisé sur la fréquence prescrite desdits signaux de salve de chrominance.

7. Dispositif pour l'enregistrement d'un signal audio analogique et d'un signal vidéo correspondant sur un enregistrement sur disque selon l'une quelconque des revendications 1 à 6, le dispositif comprenant un moyen pour convertir un signal audio analogique en un signal audio numérique correspondant, un moyen pour comprimer, dans le temps, le signal audio sous forme numérique et un moyen pour enregistrer le signal audio comprimé dans le temps et le signal vidéo en temps réel sur l'enregistrement sur disque, caractérisé en ce que: ledit moyen pour comprimer le signal audio numérique dans le temps comprend un moyen pour entrelacer le signal audio numérique comprimé aux signaux conventionnels de synchronisation vidéo, pour produire un certain nombre de paquets adjacents de données de signaux audio numériques comprimés dans le temps entrelacés avec lesdits signaux de synchronisation; et ledit moyen pour enregistrer comprend un moyen pour enregistrer le signal audio numérique comprimé dans le temps sur au moins l'une desdites pistes d'enregistrement sur l'enregistrement sur disque, et pour enregistrer une seule trame double d'un signal vidéo correspondant sur une piste adjacente d'enregistrement sur l'enregistrement sur disque.

8. Dispositif tel que défini à la revendication 7, caractérisé en ce que le moyen pour enregistrer sert également à enregistrer un signal en code spécial sur la piste d'enregistrement audio, ledit signal en code spécial indiquant la longueur équivalente en temps réel dudit signal audio comprimé dans le temps.

9. Dispositif tel que défini à la revendication 7, et caractérisé de plus par un moyen pour filtrer le signal audio numérique comprimé dans le temps pour limiter le signal à une largeur de bande comparable à celle du signal vidéo correspondant.

10. Dispositif tel que défini à la revendication 7, caractérisé en ce que: les signaux de synchronisation vidéo comprennent des signaux périodiques de salve de chrominance ayant une fréquence prescrite; et le signal audio numérique comprimé dans le temps produit par le moyen pour comprimer a un débit binaire synchronisé sur la fréquence prescrite des signaux de salve de chrominance.

11. Dispositif pour l'enregistrement d'un signal audio analogique et d'une trame double correspondante d'un signal vidéo sur un enregistrement sur disque selon l'une quelconque des revendications 1 à 6, ledit dispositif comprenant un moyen pour convertir le signal audio analogique en un signal audio numérique à un débit binaire relativement faible, comprimer le signal audio sous forme numérique et enregistrer le signal audio comprimé et le signal vidéo en temps réel sur l'enregistrement sur disque, caractérisé par: un moyen formant mémoire pour stocker les données incorporées dans le signal audio numérique à faible débit binaire; un moyen pour extraire les données stockées dans le moyen formant mémoire, pour produire une succession de paquets adjacents de bits ayant un débit binaire relativement élevé; un moyen pour entrelacer les paquets de bits successifs avec des signaux conventionnels de synchronisation vidéo qui contiennent des signaux périodiques de salve de chrominance ayant une fréquence prescrite synchronisée sur le débit binaire des paquets de bits, pour produire un signal audio numérique comprimé dans le temps; et un moyen pour enregistrer le signal audio numérique comprimé dans le temps sur une piste d'enregistrement audio sur l'enregistrement sur disque, et pour enregistrer le signal vidéo sur une piste d'enregistrement vidéo séparée sur l'enregistrement sur disque.

12. Procédé pour l'enregistrement d'un signal audio analogique et d'un signal vidéo correspondant sur un enregistrement sur disque selon l'une quelconque des revendications 1 à 6, le procédé comprenant les étapes de convertir un signal audio analogique en un signal audio numérique correspondant, de comprimer le signal audio numérique dans le temps et d'enregistrer le signal audio comprimé et un signal vidéo en temps réel sur l'enregistrement sur disque, caractérisé en ce que: ladite étape de compression consiste à comprimer le signal audio numérique dans le temps et à entrelacer le signal audio numérique comprimé avec des signaux conventionnels de synchronisation vidéo, pour produire un certain nombre de paquets de données de signaux audio numériques adjacents comprimés dans le temps entrelacés avec lesdits signaux de synchronisation; ladite étape d'enregistrement comprend: l'enregistrement du signal audio numérique comprimé dans le temps sur une piste d'enregistrement audio sur l'enregistrement sur disque; l'enregistrement d'un signal vidéo correspondant sur une piste séparée d'enregistrement vidéo sur l'enregistrement sur disque; et la répétition des étapes précédentes sur des groupes supplémentaires de signaux audio et vidéo correspondants, les signaux étant enregistrés sur des paires différentes de pistes correspondantes d'enregistrement audio et vidéo.

13. Dispositif pour reproduire un enregistrement sur disque selon la revendication 1 comprenant un lecteur de l'information, une mémoire (77) agencée pour stocker chaque segment de l'information audio comprimée dans le temps, un moyen agencé pour reproduire le segment associé de l'information audio de manière répétée un certain nombre de fois, lequel nombre est identifié sur l'enregistrement par un code spécial et un moyen (69, 71, 83) pour extraire de la mémoire le segment d'information audio stockée comprimée dans le temps et reproduire simultanément l'information audio dans les segments de manière synchronisée dans le temps, à un débit normal (dilaté dans le temps) de l'information sur l'enregistrement, caractérisé en ce que: ledit lecteur comprend un moyen pour lire la totalité de l'information audio comprimée dans le temps dans ledit segment d'information audio en un passage de la piste ou des pistes contenant ledit segment d'information audio; et un moyen pour reproduire subséquemment de manière répétée ledit segment associé de l'information vidéo.

14. Dispositif pour reproduire un enregistrement sur disque selon l'une quelconque des revendications 1 à 6, où est enregistré un signal composite spécial qui contient un signal audio mis sous forme numérique et comprimé dans le temps et un signal vidéo représentatif d'une trame double vidéo, où le dispositif sert à produire une image fixe de la trame double vidéo représentée par le signal vidéo enregistré, avec accompagnement d'un signal audio analogique correspondant au signal audio comprimé dans le temps enregistré, ledit dispositif comprenant: un moyen pour explorer l'enregistrement sur disque pour récupérer le signal audio comprimé dans le temps de l'enregistrement, ledit signal audio comprimé dans le temps ayant un débit binaire relativement élevé; une mémoire (77) pour stocker les paquets successifs de données numériques dérivées du signal audio récupéré comprimé dans le temps, ledit moyen pour explorer servant de plus, après récupération du signal audio comprimé dans la temps, à récupérer le signal vidéo de l'enregistrement sur disque; un moyen pour visualiser d'une manière répétée, la trame double vidéo représentée par le signal vidéo récupéré; un moyen (69, 71, 83) fonctionnant simultanément avec ledit moyen pour visualiser, pour extraire les données numériques de ladite mémoire (77) et produire un signal numérique intermédiaire correspondant au signal audio comprimé dans le temps, ledit signal intermédiaire ayant un débit binaire relativement faible; et caractérisé en ce que: ledit signal audio comprimé dans le temps est enregistré sur une première piste du disque et ladite trame double vidéo est enregistrée sur une seconde piste; les données numériques incorporées dans le signal audio comprimé dans le temps enregistré sur la première piste sur l'enregistrement sur disque sont entrelacées avec des signaux conventionnels périodiques de synchronisation vidéo qui contiennent des signaux périodiques de salve de chrominance ayant une fréquence prescrite et où le débit binaire du signal audio comprimé dans le temps est synchronisé sur la fréquence prescrite des signaux de salve de chrominance; et ledit dispositif comprend un moyen (69, 83) pour séparer les données numériques des signaux de synchronisation du signal audio comprimé dans le temps récupéré du disque, pour produire une succession de paquets de données numériques.

15. Dispositif selon la revendication 14, caractérisé par: un moyen de démodulation delta (99) pour convertir le signal numérique intermédiaire en signal audio analogique correspondant, pour une restitution simultanée avec la visualisation répétée de la trame double vidéo.

Fig.1

0 025 277

Fig.3

Fig.2

VIDEO/DATA INPUT SIGNAL (FROM DISC PLAYER MACHINE)

65

DATA NORMALIZER  67

91  CLOCK IN

MEMORY B  77

97  CLOCK OUT

ADAPTIVE DELTA DE-MODULATOR  99

101  ANALOG AUDIO OUTPUT SIGNAL

89  83  AND  81

95

85

87

7.2 MHz  12 KHz

CLOCK GENERATOR B  71

12 KHz ENAB.  7.2 MHz ENAB.  75

CHROM. BURST TIM.SIG.  72

93  VERT. BLANKING  HORIZ. BLANK.

SEQUENCE CONTROLLER B  69

103  SQUELCH SIGNAL

DATA FLAG SIGNAL (FROM DISC PLAYER MACHINE)  73

13

11

2